# EUROPÄISCHE PATENTANMELDUNG

(11) **EP 0 759 507 A1**
(43) Veröffentlichungstag der Anmeldung: **26.02.1997**
(21) Anmeldenummer: 96106811.1
(22) Anmeldetag: 30.04.1996
(51) Int. Cl.: F04D 29/58, H02K 11/00, F24D 3/02

(54) **Elektrischer Antrieb, insbesondere für eine Heizungsumwälzpumpe**

(30) Priorität: 23.08.1995 DE 19531078
(71) Anmelder: KSB Aktiengesellschaft, 67227 Frankenthal (DE)
(72) Erfinder: Berthon, Jacques, 36250 St. Maur (FR); Fetz, Joachim, Dr., 67227 Frankenthal (DE); Prangenberg, Manfred, 67283 Obrigheim (DE)

(57) **Zusammenfassung**

Bei elektrischen Antrieben mit einem integrierten elektrischen System zur Drehzahlregelung, wie beispielsweise in Heizungsumwälzpumpen oder Unterwassermotorpumpen im Einsatz, stellt die Kühlung der Elektronikbauteile insbesondere in heißer Umgebung ein Problem dar, das zu einer Leistungsbegrenzung für die Anwendung dieser Technologie führt.

Bislang wird die Kühlung dieser integrierten Bauteile durch eine erzwungene Kühlung mittels eines ein- oder angebauten Ventilators oder durch natürliche Konvektion unter Vorhersehung von metallischen Kühlkörpern mit einer großen Wärmeaustauschfläche vorgenommen.

Es ist ein elektrischer Antrieb mit integriertem elektrischen System zur Drehzahlregelung zu schaffen, der kompakt ist und ohne zusätzlichen Lüfter auskommt.

Durch die Kühlung des elektrischen Systems mit einem thermoelektrischen Element kann unter Beibehaltung einer integrierten Bauweise die Wärme von den empfindlichen Stellen des elektrischen Systems abgeführt werden.

## Beschreibung

### Technisches Gebiet

Die Erfindung betrifft einen elektrischen Antrieb mit einem integrierten elektrischen System zur Drehzahlregelung. Derartige Antriebe sind beispielsweise in Heizungsumwälzpumpen oder Unterwassermotorpumpen im Einsatz.

### Stand der Technik

Die Kühlung der Elektronikbauteile bei integrierten elektrischen Systemen zur Drehzahlregelung stellt insbesondere in heißer Umgebung ein Problem dar, das zu einer Leistungsbegrenzung für die Anwendung dieser Technologie führt.

So sind bekannte Antriebe für Heizungsumwälzpumpen Umgebungstemperaturen ausgesetzt, die 100 °C und mehr erreichen können. Der Pumpenantrieb ist so zu konstruieren, daß er dieser Temperatur und zusätzlich der Temperaturerhöhung als Folge seiner eigenen Erwärmung standhält.

Zur Anpassung der Betriebszustände der Antriebe in Abhängigkeit verschiedener Parameter, wie beispielsweise dem Durchfluß, dem Temperaturunterschied oder dem Druckunterschied in dem Rohrleitungssystem einer Heizungsumwälzpumpe werden verschiedene Systeme zur elektrischen Drehzahlregelung eingesetzt. Dabei werden die Leistungsbauteile elektrischer Systeme zur Drehzahlregelung bei zu hoher Temperatur der Gefahr der Beschädigung ausgesetzt. So können Leistungsstufen keine höheren Temperaturen als 125 °C vertragen, bei Glättungskondensatoren ist dieser Wert sogar auf ungefähr 85 °C begrenzt.

Zur Vermeidung der Gefahr der thermischen Beschädigung können diese Systeme außerhalb des Antriebs und damit entfernt von der Wärmequelle angebracht sein. Aus Gründen einer kompakten Bauweise sind allerdings immer mehr elektrische Systeme zur Drehzahlregelung in den Antrieb integriert und daher direkt oder indirekt der aus der Erwärmung des Antriebs und der Wärme der Umgebung zusammengesetzten Temperatur unterworfen.

Bislang wird die Kühlung dieser integrierten Bauteile durch eine erzwungene Kühlung mittels eines ein- oder angebauten Ventilators oder durch natürliche Konvektion unter Vorhersehung von metallischen Kühlkörpern mit einer großen Wärmeaustauschfläche vorgenommen.

Die Aufgabe der Erfindung besteht darin, einen elektrischen Antrieb mit integriertem elektrischen System zur Drehzahlregelung zu schaffen, der kompakt ist und ohne zusätzlichen Lüfter auskommt.

### Darstellung der Erfindung

Durch die Kühlung des elektrischen Systems mit einem thermoelektrischen Element kann unter Beibehaltung einer integrierten Bauweise die Wärme von den empfindlichen Stellen des elektrischen Systems abgeführt werden. Das thermoelektrische Element macht sich den Peltier-Effekt zunutze, indem es unter Stromfluß eine kalte Seite und eine warme Seite bereitstellt. Damit wird die Temperatur des elektrischen Systems unterhalb eines kritischen Werts gehalten und die entstehende Wärme wird örtlich verschoben abgeführt.

In einer bevorzugten Ausführungsform werden hauptsächlich die Leistungsstufen und der Glättungskondensator gekühlt, wobei insbesondere die Kühlung des Kondensators einen entscheidenden Vorteil bringt, da dieser die Zuverlässigkeit und Lebensdauer des gesamten elektronischen Systems bestimmt. Mit der Anbringung des thermoelektrischen Elements in unmittelbarer Nähe des Kondensators wird somit eine wesentliche Erhöhung der Betriebssicherheit erreicht.

In einer weiteren Ausführungsform sind bekannte Mittel zur Erfassung einer Zustandsgröße vorgesehen, über welche die Kühlleistung des thermoelektrischen Elements beeinflußt wird. Damit kann die durch das thermoelektrische Element zusätzlich erforderliche elektrische Leistung möglichst gering gehalten werden.

In einem weiteren Ausführungsbeispiel erfolgt die Regelung der Kühlleistung des thermoelektrischen Elements über eine Erfassung der Stromstärke, der durch das System zur Drehzahlregelung aufgenommenen elektrischen Leistung oder die Temperatur.

Die Leistung des thermoelektrischen Elements wird dabei über die Energiezufuhr über den Speisestromkreis geregelt. Dabei kann eine Phasenanschnittssteuerung verwendet werden, die eine einfache Regelung darstellt. Der Kühlstrom kann durch die Veränderung des Effektivwerts der Spannung am Ausgang der Anschnittsteuerung vorgenommen werden.

In bevorzugter Weise eignet sich der Antrieb als Naßläufermotor einer Heizungsumwälzpumpe an einem Heißwasserkreislauf, da hier die thermischen Verhältnisse besonders problematisch sein können. Der betriebsbedingten Erwärmung des Antriebs überlagert sich die hohe Temperatur des Fördermediums, welches in unmittelbarer Umgebung des elektrischen Systems zur Drehzahlregelung durch den Antrieb strömt.

Aber auch bei Kaltwasserpumpen kann der Antrieb vorteilhaft eingesetzt werden, da das elektrische System unmittelbar gekühlt wird.

### Kurze Beschreibung der Zeichnung

Anhand einer Heizungsumwälzpumpe wird die Erfindung erläutert. Es zeigt die
- Fig. 1: eine Heizungsumwälzpumpe mit integrierter Drehzahlverstellung und thermoelektrischer Kühlung
- Fig. 2: eine Ausgestaltung der Kühlvorrichtung, die
- Fig. 3: einen schematischen Temperaturverlauf innerhalb des elektrischen Systems und die
- Fig. 4: den schematischen Zusammenhang zwischen der Temperatur des elektrischen Systems und der von diesem aufgenommenen elektrischen Leistung.

### Weg zur Ausführung der Erfindung

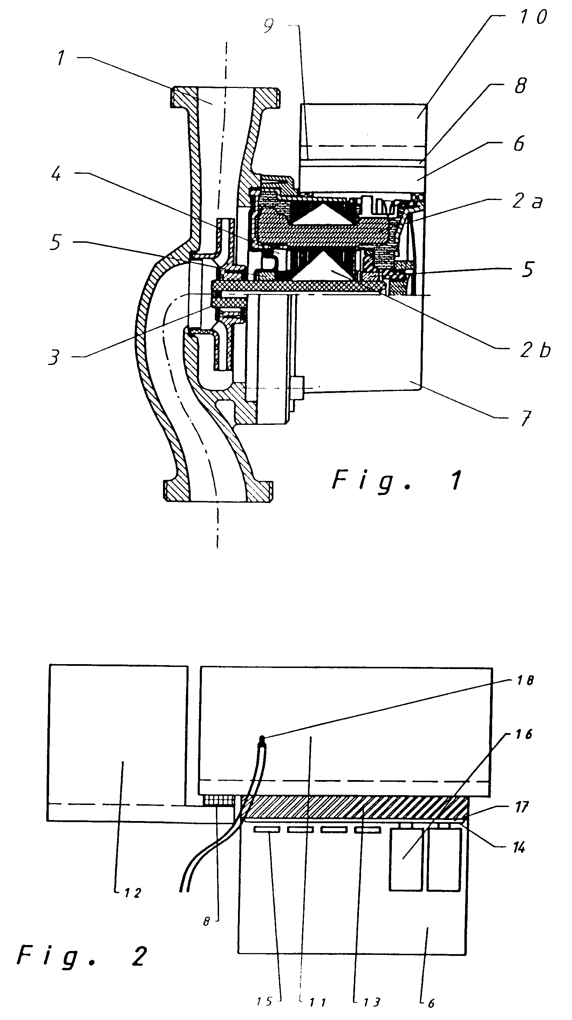

Die in Fig. 1 dargestellte Heizungsumwälzpumpe besteht aus einem Pumpenteil 1, das mit einem elektrischen Antrieb 2a,2b verbunden ist. Der elektrische Antrieb 2 weist einen Stator 2 a und einen Läufer 2b auf. Der Läufer 2 b verfügt über eine Welle 3 und wird im Fördermedium 4 betrieben. Die Lagerung 5 der Welle 3 erfolgt im Fördermedium.

Zur Drehzahlregelung des elektrischen Antriebs 2 ist ein elektrisches System 6 am Gehäuse 7 des Antriebs angeordnet. Es ist auch möglich, das elektrische System in das Gehäuse des Antriebs zu integrieren. Das elektrische System 6 weist zudem Leistungsstufen und Kondensatoren, insbesondere zur Glättung der Spannung, auf, in denen der Hauptteil der elektrischen Verlustleistung anfällt und in Wärme umgesetzt wird. Zur Kühlung des elektrischen Systems 6 ist ein Peltierelement 8, welches nach dem thermoelektrischen Prinzip arbeitet, in dessen unmittelbarer Nähe angebracht. Die heiße Seite 9 des Peltierelementes 8 ist mit einem Kühlkörper 10 verbunden, welcher Kühlrippen aufweist.

Wegen der Anordnung des Peltierelementes 8 zwischen dem elektrischen System 6 und dem Kühlkörper 10 muß das Peltierelement 8 ständig betrieben werden, um die Wärmeabfuhr über den Kühlkörper 10 sicherstellen zu können. Dabei kann der Kühlkörper 10 eine gegenüber der herkömmlichen Bauweise höhere Betriebstemperatur aufweisen, ohne daß die Temperatur des elektrischen Systems bei Spitzenbelastung die kritische Temperatur überschreitet. Der Kühlkörper 10 kann folglich deutlich kompakter gehalten werden.

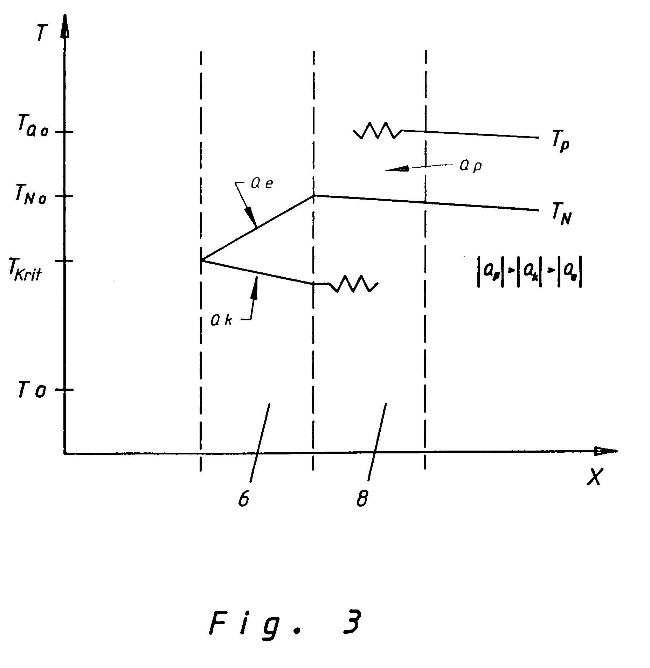

Es ist aber nicht immer notwendig, auf der gesamten Kontaktfläche des elektrischen Systems 6 bzw. des Kühlkörpers 10 ein Peltierelement 8 anzuordnen. In Fig. 2 wird die Kühlleistung des direkt mit dem elektrischen System 6 verbundenen Kühlkörpers 11 durch das seitlich angeordnete Peltierelement 8 erhöht. Selbstverständlich muß die heiße Seite des Peltierelements 8 selbst auch gekühlt werden. Dies erfolgt durch den Kühlkörper 12. Zur Verbesserung des Transports der durch die Leistungsstufen erzeugten Wärme, ist eine wärmeleitende Platte 13 vorgesehen, welche eine Homogenisierung der Temperatur bewirkt und damit heiße und kältere Gebiete ausgleicht.

Durch das Peltierelement 8 wird die Wärme von der Platte 12 über den Kühlkörper 11 abgezogen und ein Teil der Wärme über den Kühlkörper 12 dissipiert.

Der Kühlkörper 11 ist dabei so ausgeführt, daß die über ihn abzuführende Wärmemenge einer bestimmten, unterhalb der Maximalleistung liegenden Betriebsleistung entspricht, die mit einer Temperatur T_{krit.} des elektrischen Systems 6 korrespondiert. Diese Betriebsleistung bestimmt sich aus einer erfahrungsgemäßen durchschnittlichen Anforderung an die Heizungsumwälzpumpe.

Die Maximalleistung hingegen wird lediglich an einigen Tagen im Jahr erbracht werden müssen, an denen es besonders kalt ist. Wird die Maximalleistung angefordert, so wird bei Erreichen der kritischen Temperatur das Peltierelement 8 zugeschaltet, um dem Kühlkörper 11 die zusätzlich bei Betrieb über der Betriebsleistung entstehende Wärme zu entziehen. Das Peltierelement 8 selbst benötigt aber wiederum einen Kühlkörper 12, der allerdings kleiner sein und heißer betrieben werden kann. Die Verringerung der Größe des Kühlkörpers fällt damit nicht so deutlich aus, allerdings verringern sich die elektrischen Verluste durch das Peltierelement aufgrund eines Betriebs lediglich bei Spitzenlasten.

Fig. 2 zeigt weiterhin als aufgebrochene Seitenansicht verschiedene Komponenten des elektrischen Systems 6. Auf einer Platine 14 sind Leistungsstufen 15 und ein Glättungskondensator 16 angeordnet. Die Platine 14 ist über ein wärmeleitfähiges Material mit Isoliereigenschaft 17 mit der Platte 13 verklebt. Es ist auch möglich, die Kondensatoren und Leistungsstufen thermisch voneinander zu entkoppeln, indem sie auf verschiedenen Platten angeordnet sind. Über ein Thermoelement 18 wird die Temperatur des Kühlkörpers 11 erfaßt und zur Steuerung der Kühlleistung des Peltierelements 8 verwendet.

Fig. 3 zeigt schematisch den Wärmetransport vom elektrischen System weg zu dem Kühlkörper hin bei Verwendung des Peltierelements wie in Fig. 2 gezeigt.

Im elektrischen System 6 wird die Verlustleistung Qₑ der elektrischen Drehzahlregelung in Wärme umgesetzt. Ausgehend von einer schon erreichten kritischen Temperatur T_{krit.}, deren Überschreitung ein Zerstören der Bauteile zur Folge hätte, wird bei weiterer Wärmezufuhr Qₑ im elektrischen System die vom Kühlkörper abführbare Wärmemenge überschritten und die Temperatur wird auf den Wert T_{No} (oberer nichtgekühlter Wert) steigen. Der Kühlkörper sorgt zwar für einen kontinuierlichen Abfluß der im elektrischen System erzeugten Wärme durch die Umgebungsluft mit der Temperatur Tₒ, schafft aber nicht den Temperaturausgleich. Der Einsatz des Peltierelements 8 hingegen führt im Bereich des elektronischen Systems eine Kühlleistung Q_{K} zu bzw. Wärme ab, die im gezeichneten Fall größer als die elektrische Wärme ist. Im Bereich des elektrischen Systems sinkt folglich die Temperatur sogar ab. Der kritische Wert wird nicht überschritten, die elektronischen Bauteile werden vor Überhitzung geschützt.

Die Wärmemenge Qₚ, die sich aus der Kühlleistung Q_{K} und einer Verlustleistung des Peltierelements zusammensetzt, heizt die warme Seite derselben zwar weit über die kritische Temperatur und sogar über T_{No} hinaus auf. Diese Temperatur ist an dieser Stelle aber unschädlich für das elektrische System. Die Verlustwärme Qₑ des elektrischen Systems wird somit an eine Stelle transportiert, wo keine Gefahr der Beschädigung der elektrischen Bauteile mehr besteht. Dort wird die Wärme über den vorhandenen Kühlkörper abgegeben. Dabei verhalten sich die Wärmemengen folgendermaßen: |Qₚ|>|Qₖ|≥|Qₑ|_{.}

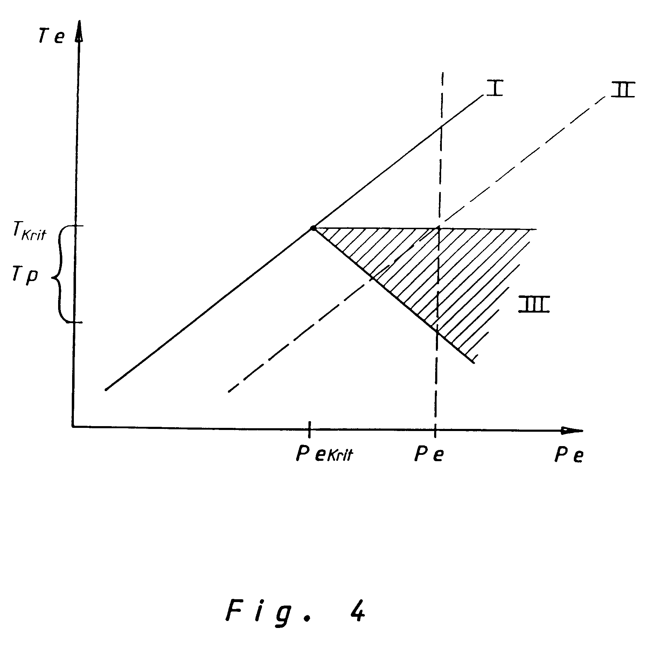

Fig. 4 zeigt schematisch den Verlauf der Temperatur in der Abhängigkeit der Leistung des elektrischen Systems. Die Kurve I soll das Verhalten eines bislang bekannten Systems mit Kühlkörper darstellen. Mit zunehmender elektrischer Leistung P_{E} steigt auch die Temperatur. Bei einer kritischen Leistung P_{E, krit.}wird eine Temperatur T_{krit.} erreicht. Die Erhöhung der Leistung über den Punkt P_{E, krit.} hinaus hat ein Ansteigen der Temperatur über T_{krit.} hinaus zur Folge. Bei dieser erhöhten Temperatur nimmt das elektronische System Schaden.

Die Kurve II zeigt die Abhängigkeit der Temperatur von der Leistung bei Einsatz eines Peltierelementes, das zwischen dem Kühlkörper und dem elektrischen System angeordnet ist (Fig. 1). Der Betrieb des Peltierelementes verschiebt die Kurve zu höheren Leistungen hin, so daß trotz höherer Leistung die kritische Temperatur erst später erreicht wird.

Die Kurve III entspricht der Ausgestaltung mit zeitweise zugeschaltetem Peltierelement bei Überschreitung einer kritischen Temperatur oder Leistung (Fig. 2). Zunächst deckt sich der Kurvenverlauf der Kurve III bis zum Erreichen des kritischen Punktes mit dem Verlauf der Kurve I. Durch die Zuschaltung des Peltierelementes wird jedoch die Temperatur selbst bei zunehmender Leistung nicht überschritten. Abhängig von der Kühlleistung des Peltierelementes kann es sogar zu einem Temperaturabfall kommen.

Mit einer einfachen Rechnung kann man die Leistung des Peltierelementes bestimmen. Ein Antrieb für eine Heizungsumwälzpumpe mit einer Aufnahmeleistung von 500 W und einem Wirkungsgrad des Drehzahlreglers von 95 % ergibt eine abzuführende Wärme von 500 : 0,95 = 526 W, d. h. eine zu kühlende Wärmeleistung von 26 W.

Ein handelsübliches Peltierelement mit einer Aufnahmeleistung von 8,5 A x 8,6 V = 73 W zur Erreichung einer maximalen Kühlleistung von 38,5 W, d. h. ein Wirkungsgrad von 52 %, benötigt in dem oben geschilderten Fall eine elektrische Leistung von 26 : 0,52 = 50 W. Die von der aus dem Drehzahlregler und dem Peltierelement bestehende Gesamtheit aufgenommene Leistung errechnet zu 526 + 50 = 576 W, d. h. ein Gesamtwirkungsgrad von 87 %. Dieser verringerte Wirkungsgrad erhöht zwar den Stromverbrauch im Vergleich zu einer natürlichen Kühlung, ist aber ungefähr vergleichbar mit dem Stromverbrauch eines zusätzlichen zur Kühlung eingesetzten Lüfters.

Im Falle einer Heizungsumwälzpumpe wird davon ausgegangen, daß die maximale Leistung nur 5 % der Zeit, das sind 10 Tage pro Jahr bei 200 Betriebstagen gefordert wird. Daher erscheint es angebracht, den Wirkungsgrad des Peltierelementes dadurch zu verbessern, daß sein Einsatz und sein Energiebedarf genau am Bedarf der zu kühlenden Stufen ausgerichtet wird. Diese Regelung kann in einfacher Weise durch eine Analyse der Stromstärke oder der vom Drehzahlregler aufgenommenen Leistung abhängig gemacht werden und bestimmt auf diese Weise die vom Peltierelement abzuführende Wärmemenge.

Die Regelung der Kühlleistung kann aber auch durch eine Temperaturmessung vorgenommen werden. Dabei kann beispielsweise die Temperatur des Glättungskondensators, der Leistungsstufen oder des Kühlkörpers zur Regelung herangezogen werden.

## Patentansprüche

1. Elektrischer Antrieb (2) mit integriertem elektrischen System zur Drehzahlregelung (6), **dadurch gekennzeichnet**, daß das elektrische System (6) von einem thermoelektrischen Element (8) gekühlt wird.

2. Elektrischer Antrieb nach Anspruch 1, dadurch gekennzeichnet, daß das elektrische System (6) Leistungsstufen (15) und/oder Kondensatoren (16) aufweist, die durch das thermoelektrische Element (8) gekühlt werden.

3. Elektrischer Antrieb nach einem der vorhergehenden Ansprüche, dadurch gekennzeichnet, daß Mittel (18) zur Erfassung einer Zustandsgröße vorgesehen sind, über welche die Kühlleistung des thermoelektrischen Elementes (8) beeinflußt wird.

4. Elektrischer Antrieb nach Anspruch 3, dadurch gekennzeichnet, daß die Mittel die Stromstärke, die aufgenommenen Leistung oder die Temperatur erfassen.

5. Elektrischer Antrieb nach Anspruch 1, dadurch gekennzeichnet, daß dessen Läufer und Lagerung in einer Flüssigkeit betrieben werden (Naßläufermotor).

6. Heizungsumwälzpumpe mit einem elektrischen Antrieb nach einem der vorhergehenden Ansprüche.
